# EUROPEAN PATENT SPECIFICATION

(11) **EP 0 451 959 B1**
(45) Date of publication and mention of the grant of the patent: **28.08.1996**
(21) Application number: 91302112.7
(22) Date of filing: 13.03.1991
(51) Int. Cl.: G11B 21/12, G11B 5/54, G11B 5/60

(54) **Harddisk drive head slider lifter**
Abhebeeinrichtung für den Schreib/Lesekopf einer Festplatte
Dispositif de levage d'une tête magnétique pour disque dur

(30) Priority: 05.04.1990 US 504929
(43) Date of publication of application: 16.10.1991
(73) Proprietor: SEAGATE TECHNOLOGY INTERNATIONAL, Georgetown Grand Cayman Island (KY)
(72) Inventor: Yaeger, John Richard, Sunnyvale, California 94086 (US); Battu, Ramgopal, Canoga Park, California 91306 (US)
(74) Representative: Sturt, Clifford Mark

(56) References cited:
- DE-A- 2 250 044
- DE-A- 3 822 760
- US-A- 4 605 979
- US-A- 4 651 242
- US-A- 4 684 913

## Description

The present invention relates to slider lifters for disk drives. Such slider lifters are for physically lifting sliders with read/write heads off information storage discs during startup and shutdown.

Disk drive machines record and reproduce information stored on a recording media. Typical hard disk drives, often referred to as Winchester disk drives include one or more vertically aligned, spaced apart, rotating information storage disks, each having at least one associated slider with magnetic read/write head adapted to transfer information between the disk and an external computer system. The information storage disks are journalled about a spindle motor assembly capable of rotating the disks at high speeds. The sliders are carried by a plurality of vertically-aligned, elongated flexure arms that in turn are carried by a head positioner assembly. The head positioner assembly is adapted to move the sliders back and forth in unison across the faces of the vertically-aligned disks. The head positioner assembly is traditionally either rotationally mounted or takes the form of a carriage that is free to move back and forth along a single axis. In either case, the head positioner assembly is adapted to position the heads precisely relative to the magnetic information storage disks.

In the operation of such a disk drive, the sliders rest on landing zones on the surface of their associated disks when the power is off. In operation, the drive unit is powered up and the disks begin to rotate. Once the disks reach a certain critical speed, the sliders rise slightly off the landing zone under the lifting influence of a small air bearing which is created by the speed of rotation of the disks. During normal operation, the sliders remain floating above the disks and are said to "fly" over the disks, thereby preventing wear on the disk surfaces and potential destruction of the data. However, until the sliders rise, there is considerable friction associated with the heads dragging over the disks, which causes wear to both the heads and the disks. When the drive unit is powered down, the same friction will occur between the surfaces of the heads and the rotating disk surfaces. In practice, breaking the heads free from the disk surfaces on which the sliders have been resting can require a considerable force to overcome the force (called stiction) which holds the two smooth surfaces together.

In order to reduce this friction and minimise damage, the disks are coated with a protective layer and lubricants are applied to the disk surfaces. Additionally, the disks typically require a dedicated landing zone where the sliders can slide to a halt and rest when the drive unit is turned off. No data can be stored in this dedicated landing zone, because repetitive starting and stopping of the disk tends to wear the landing zone. Consequently, the amount of data that can be stored on each disk is reduced. Moreover, a relatively large disk drive motor is required to overcome the adverse friction and stiction effects. Further, in order to reduce frictional wear when the motor is turned off, a motor brake is often also required to stop the rotation of the disks.

Thus, it is desirable to raise the sliders during power-up and to keep them up for a brief period after power-down at least until the disks have essentially come to a halt. Such an ability would eliminate the adverse effects of friction.

A wide variety of arrangements have been proposed to raise and lower the sliders at selected times. A few have proposed to take advantage of the shape memory metal phenomenon within the lifter mechanism. The phenomenon of shape memory is based on thermo-elastic martensitic transformation. A shape memory alloy, such as Ti-Ni alloy, has a high temperature austenitic phase wherein the crystal structure is body centre cubic. In the austenitic phase, the alloy is very strong and is not easily deformed. When cooled below its transformation temperature, the austenitic structure undergoes a diffusionless shear transform into a highly twinned martensitic crystal structure. In the martensitic phase, the alloy is easily deformed by the application of a small external force. When the alloy is heated through its transformation temperature, the martensitic phase is elastically returned to the austenitic phase (referred to as an inverse transformation) according to a given ordered crystal and orientation law. A notable characteristic of the alloy is the extremely large recovery force that is generated when returning to the austenitic phase. Therefore, the employment of a resilient force as a bias force capable of deforming the alloy in its martensitic phase permits the alloy to be used as a reversible actuator with temperature cycling. Further, because the recovery force which is generated with the return of the austenitic phase is quite large, it is possible to take advantage of the recovery force to do work.

It has now been realised by the applicants that it is important to the design of slider lifters to provide a device which raises and lowers the sliders without requiring significant modification of the design of the flexure arms. Avoiding substantial modification of the existing design of the flexure arms is a primary requirement for a successful device for loading and unloading the head. The lack of success of prior art proposals is due in significant part to the need seriously to alter the flexure design. In a conventional floating head slider, the head is expected to float or fly in a stable fashion about 0.2 micrometres over the surface of the disk which is rotating at a constant speed. Therefore, the combined flexure arm and slider are very sensitive to their loading and aerofoil characteristics, and a great deal of time and effort goes into their design. Accordingly, any proposal that requires modification of the flexure arm is looked upon with great disfavour. Another drawback of prior art proposals is that they tend to require the assembly of a relatively large number of intricate parts. Such designs are not favoured because they add significantly to the costs of manufacturing and increase the probability of defective parts.

In US-A-4,605,979 and US-A-4,684,913, devices are described, which incorporate the use of shape memory alloys in an attempt to provide a more efficient system for loading and unloading a transducer head from a disk surface. However, they both use relatively high profile devices which require significant spacing between adjacent disks. In present disk drive technology, such spacing is simply no longer available. To maximize the capacity of disk drives being manufactured, disks are spaced as closely as the supporting flexure will allow. Even in the case of a drive with a single disk, the spacing between the disk and other parts of the drive is as close as possible. It is important that a lifter design maintains an extremely low profile, as well as not requiring modification of the flexure design.

US-A-4,605,979 discloses several proposed lifters for lifting the flexure to unload the slider. Each of the disclosed proposals uses a resilient biasing member in combination with shape memory alloy to load and unload the slider. In one such proposal, a wire formed of shape memory metal extends forward from the guide bar upon which a load arm (flexure) is mounted. The wire is coated with a silicone resin which serves as the resilient biasing member. The silicone resin also serves to insulate thermally the wire. However, such an arrangement has the drawback of requiring a delicate coating of the shape memory wires in their martensitic state which adds to the complexity and costs of assembly.

The present invention seeks to overcome the problems encountered by the prior art proposals. One object is to provide a compact slider lifter arrangement for disk drives that is capable of lifting sliders within a stack of tightly spaced, small diameter disks. Another object is to provide a slider lifter whose use does not necessitate an alteration in basic flexure design. Yet another object is to provide a slider lifter that is easy to assemble and has a low parts count.

According to the invention, a slider lifter assembly for a disk drive assembly is provided as defined in Claim 1.

In one embodiment of slider lifter according to the present invention, a slider lifter arrangement for conventional disk drives uses an element of shape memory alloy to lift a transducer slider away from the surface of an associated disk. The slider lifter includes a wire support having a pair of extended wire support arms extending outward from a head positioning carriage adjacent opposite sides of a flexure arm that carries a slider. A lifting wire is strung between the opposing wire support arms in the space between the flexure arm and the disk surface. The lifting wire is formed from a shape memory alloy having martensitic and austenitic phase conditions. The wire cooperates with the flexure arm so that when the wire is in a first phase condition, it lifts the flexure arm sufficiently to lift the slider off the disk surface. In contrast, when the wire is in a second phase condition, the flexure arm deforms the lifting wire so that the slider is allowed to rest on the disk surface. The wire is selectively electrically heated to change its state from one phase condition to the other.

In a preferred embodiment, the wire support is formed integrally with the flexure assembly. In other preferred embodiments, the lifting wire may take either a substantially U-shaped or a substantially straight orientation in the first phase condition. The lifting wire is also preferably coated with an insulating material.

In a further preferred embodiment, the flexure assembly includes a flexure arm, the pair of opposing support arms and a base portion having attachment means for coupling the flexure assembly to a positioning means.

The invention may also be considered to be a slider lifter arrangement for a disk drive assembly including a rotatable information storage disk having a data storage surface, a flexure arm that carries a slider transducer for transferring information between the information storage disk and an external system, the flexure arm being designed such that when the disk is rotating at an operational speed, the slider flies above the surface of the disk and when the disk is stopped, the slider and flexure arm are at rest, and a head positioning means for positioning the slider relative to the information storage disk, the slider lifter comprising a wire support carried by the head positioning means, the wire support having a pair of extended wire support arms extending outward from the head positioning means adjacent opposite sides of the flexure arm; a lifting wire strung between the opposing wire support arms in a space between the flexure arm and the disc surface, the lifting wire being formed from a shape memory alloy having martensitic and austenitic phase conditions, wherein the lifting wire co-operates with the flexure arm such that when the lifting wire is in a first phase condition, the lifting wire lifts the flexure arm to lift the slider further from the disk surface and when the wire is in a second phase condition, the flexure arm deforms the lifting wire such that the slider is allowed to rest or fly independently over the disk surface, and transform means for heating the lifting wire to change the state of the lifting wire from one of said phase conditions to the other said phase condition.

It may also be considered to extend to a disk drive comprising an information storage disk rotatably journalled about a spindle assembly, the information storage disk having a data storage surface; a slider transducer for transferring information between the data storage surface and an external system; carriage means for positioning the slider relative to the information storage disk; a flexure assembly coupled to the carriage means, the flexure assembly including a flexure arm that carries the slider and a pair of extended wire support arms extending outward from the carriage means adjacent opposite sides of the flexure arm, the flexure arm being designed such that when the disk is rotating at an operational speed, the slider flies above the surface of the disk and when the disk is stopped, the slider rests on or adjacent the surface of the disk; a housing for encasing the disk, flexure assembly, slider and carriage means; a lifting wire strung between the opposing wire support arms in a space between the flexure arm, and the disk surface, the lifting wire being formed from a shape memory alloy having martensitic and austenitic phase conditions, wherein the lifting wire co-operates with the flexure arm such that when the lifting wire is in a first phase condition, the lifting wire lifts the flexure arm to lift the slider from the disk surface and when the wire is in a second phase condition, the flexure arm deforms the lifting wire such that the slider is allowed to rest or fly over the disk surface free of positioning influence by said wire; and transform means for heating the wire to change the state of the wire from one of said phase conditions to the other said phase condition.

The present invention will be described further, by way of example, with reference to the accompanying drawings, in which:-
Figure 1 is a diagrammatic top plan view of a head positioner assembly carrying a flexure assembly incorporating the present invention;
Figure 2 is a diagrammatic side view of the head positioner assembly shown in Figure 1, partly broken away;
Figure 3 is a perspective view of a first embodiment of a flexure assembly constructed in accordance with the present invention;
Figure 4 is a diagrammatic side view of the flexure assembly shown in Figure 3 installed with the lifting wire in a martensitic phase;
Figure 5 is a diagrammatic side view similar to Figure 4 with the wire in an austenitic phase;
Figure 6 is a diagrammatic perspective view of the lifting wire shown in Figure 3 on its support arms with the flexure arm removed;
Figure 7 is a diagrammatic perspective view of a second embodiment of the flexure assembly according to the invention;
Figure 8 is a diagrammatic perspective view of the lifting wire shown in Figure 7 on its support arms with the flexure arm removed; and
Figure 9 is a broken perspective view of a coupling arrangement for providing electrical power to the shape memory wire.

In accordance with the present invention, a slider lifter arrangement is disclosed which is adapted to lift the read/write transducer heads in conventional disk drives off the disk surfaces during startup and shutdown operations. The lifter arrangement includes a pair of support arms disposed on opposite sides of a flexure arm that carries the read/write transducer head (hereinafter referred to as the slider). A lifting wire formed from a shape memory alloy is strung between the opposing support arms and extends between the flexure arm and its associated disk surface.

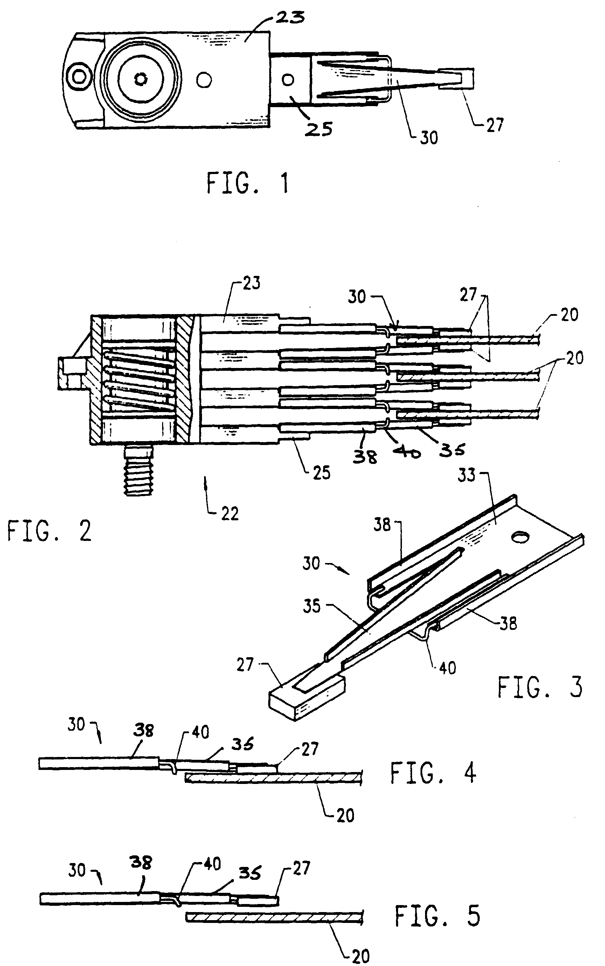

A Winchester type disk drive incorporating the present invention includes one or more magnetic information storage disks journalled about a spindle motor assembly within a housing having upper and lower casing members (not shown). For clarity, in Figure 2, a portion only of each of three spaced apart information storage disks 20 is shown. Each information storage disk 20 has a multiplicity of concentric information storage tracks for recording information. The drive also includes a data read/write head and head positioner assembly.

A head positioner assembly 22 is rotatably mounted between the upper and lower casing in one corner of the drive housing. The head positioner assembly 22 includes an E-block 23 having four vertically aligned and spaced apart support pads 25, each of which carries one or two flexure assemblies 30, each of which carries a magnetic read/write data head slider 27 for reading information from and writing information onto the information storage disks 20. One of the flexure assemblies functions as a servo arm flexure which carries a servo head for accurately positioning the remaining sliders 27 relative to the information storage tracks. A voice coil motor (not shown) is adapted to precisely rotate the head positioner assembly back and forth so that the magnetic and servo heads move across the information storage disks.

In a first embodiment, the flexure assembly 30 (Figure 3) includes a base portion 33 for coupling the flexure assembly 30 to its associated support pad 25, an integral elongated flexure arm 35 that carries the slider 27 at its distal end and a pair of integral support arms 38 that extend along, and are separated from, opposite sides of the flexure arm 35. A lifting wire 40 formed of a shape memory alloy is strung between the distal ends of opposing support arms 38.

The wire 40 extends across and below the arm 35, having its ends bent up and then back to be secured to the ends of the arms 38. Thus the lifting wire 40 is substantially of flattened U-shape, and is coupled to the distal ends of the support arms 38 in a manner which provides a good electrical connection between a power source and the lifting wire. The lifting wire 40 is formed from a shape memory alloy and is arranged to co-operate with the flexure arm to be movable between a lowered, non-lifting position (Figure 4) and a raised lifting position (Figure 5). In the lifting position, the lifting wire engages its associated flexure arm to "lift" the flexure arm 35 and its associated slider 27 away from the surface of its associated information storage disk 20. In the lowered, non-lifting position, the resilient flexure arm 35 deforms the lifting wire 40 sufficiently to allow the slider 27 to rest upon the surface of the information storage disk 20, or to fly over the surface of the disk as the disk rotates, free of positioning influence from the lifting wire 40.

The lifting wire 40 is fabricated from such a shape memory material as Ti-Ni. The shape memory alloy has a high temperature austenitic phase having a relatively high strength and a low temperature martensitic phase having a relatively low strength. At ambient and operational temperatures, the shape memory alloy is in its low temperature martensitic phase. When heated above its transition temperature, it reverts to its austenitic phase. Because the wire has a relatively small diameter, its temperature can readily be raised by passing an electrical current therethrough. The resistance of the small diameter wire is sufficient to accomplish the required heating.

The diameter of the lifting wire 40 is selected such that when the wire is in the austenitic phase, the resilience and weight of the flexure cannot significantly deform the lifting wire. However, when the lifting wire 40 is in the low strength martensitic phase, the resilience of conventional flexures can be used advantageously to co-operate with the lifting wire to deform the lifting wire sufficiently to allow the slider to rest upon or fly above the surface of the disk. If desired, the shape memory wire may be formed to have some memory in its martensitic phase. Accordingly, when the lifting wire 40 is allowed to cool to its martensitic phase, the sliders 27 are set down on the surface of the information storage disks 20.

With such an arrangement, whenever power is applied to the disk drive, that same power may be used to heat the lifting wire 40, changing the lifting wire from its martensitic phase to its austenitic phase. With the power applied, the slider is quickly lifted above the surface of the disk. When the drive is powered down, the current to the lifting wire may be turned off allowing the lifting wire to cool down. The cooling of the lifting wire 40 induces a phase transformation to the martensitic condition. As the wire cools, the resilient force of the flexure arm 35 deforms the lifting wire thereby gradually and slowly returning the slider to rest on the surface of the disk after power has been removed.

If it is desired to have the slider to fly freely above the surface of the disk, current to the lifting wire is shut off after the drive reaches its operational speed which would allow the slider to settle into its normal suspended position above the disk during operation. Then, power would again be applied to the lifting wire just before power down to ensure that the slider is lifted above the surface of the disk while the disk slows.

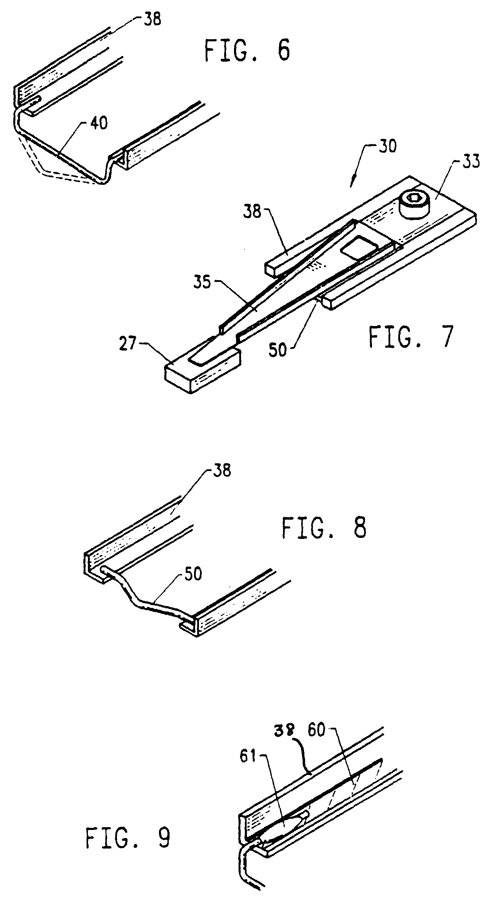

Electrical leads 60 (Figure 9), carried by the opposing support arms 38 co-operate to supply electrical current to the lifting wire 40.

The electrical leads may take the form of a printed circuit ribbon cables 60 that are laid on the support arms 38. Good electrical and mechanical connections between the ribbon cable and the lifting wire 40 may be accomplished by soldering to form solder joint 61.

The U-shape of the lifting wire 40 is particularly useful in drives requiring a relatively large displacement of the flexures. Figure 6 diagrammatically shows the deformation that can occur within the lifting wire 40. The solid lines represent the position of the lifting wire in the hot austenitic phase, while the dashed lines represent the position of the lifting wire in the cold martensitic phase. It is noted that very little cantilevered "bend" occurs in the leg portions of the U-shaped member that are coupled directly to the support arms 38. Rather, there is considerable torsion. This allows the base portion of the U-shaped lifting wire to act like a bending beam. It should be appreciated that the actual dimensions of the U-shaped member 38 will vary a great deal depending upon the desired stroke for the lifting wire and the design of the flexure arm 35. By way of example, a 6 mil diameter U-shaped lifting wire having a length of 0.635 mm (0.025 inch) extending beyond the support arms 38 and a width of 4.7625 mm (0.1875 inch) may have a stroke of approximately 0.508 mm (0.020 inch).

In modern disk drives, the information storage disks 20 within a disk pack are typically spaced as close together as the flexure design allows in order to minimise the required disk size. Therefore, in many disk drives such as most mini 2.5 inch (63.5 mm) disk drives, the flexures extend nearly parallel to the disk surface and accordingly strokes of 20 mils are not required. Indeed, in some applications, such a long stroke is undesirable. This is because, as indicated above, conventional sliders float about 0.2 micrometers above the surface of the disks which the associated transducer accesses. Although the actual floating height will vary somewhat between specific flexure designs, it is important to prevent the lifting wire from lifting the sliders too far above the disk surface so as not to interfere with the adjacent disk.

Accordingly, in an alternative embodiment of the invention (Figures 7 and 8) a straight lifting wire 50 replaces the U-shaped lifting wire described in the previous embodiment. In Figure 7 this is shown attached to the under-sides of two solid square section support arms 38 extending on either side of a flexure support 33 to which a flexure arm 35 is secured. In Figure 8, the lifting wire 50 is supported on the L-shaped support arms 38 integral with the flexure support 33 and flexure arm 35. In all other respects the flexure assembly of the second embodiment is identical to the flexure assembly of the first embodiment. It should be readily apparent that the lifting wire 50 will not have as large of a stroke as the U-shaped lifting wire. By way of example, a straight wire having a length of 5.08 mm (0.200 inches) will have a stroke of approximately 7 mils.

In practice, the lifting wire must be electrically isolated from the metallic flexure arm 35 as well as the support arms 38. This may be accomplished by coating either the wire or the flexure arm with an insulating material, such as a spray type TEFLON (P.T.F.E.) based coating. Such coatings work well because they are easily applied, resist abrasion and can be cleaned easily in addition to having good electrical insulating properties. In the preferred embodiment, the lifting wire is coated with the insulating layer which has the advantage of thermally insulating the wire. Because heat loss from the lifting wire is of concern due to the wire's very thin diameter, such thermal insulation is advantageously reducing heat loss due to air turbulence. This serves to decrease the amount of time required to lift the slider from the disk surface (because the wire heats to the transformation temperature faster), as well as to slow the return of the sliders to the disk surface (because the wire cools slower). The latter is particularly advantageous because it gives the disk pack more time to slow to a stop.

It is generally desirable to activate the lifting wire to the raised position only at the conclusion of operation, so that the head may be either rested on the disk after the disk stops rotating, moved to a parking zone or moved to a ramp. To accomplish this, power must be supplied to the lift wire.

A potential source of power is the back emf of the spindle motor which rotates the disk pack. This back emf is generated during the power down phase of operation of the disk drive. With such an arrangement, whenever external power is withdrawn from the spindle motor and the disks are to stop rotating, then the shape memory wire changes to its austenitic phase and lifts the slider off its associated disk. When the spindle motor is completely turned off and rotation ceases, the back emf ends, the wire 40 cools, and the flexure and slider reach their rest position. The lifting wire is stretched under the influence of the flexure, which acts as a leaf spring, until the slider is brought to rest on the surface of the disk or other parking area. When the disk drive is again re-started, current may again be applied to the wire to lift the flexure and begin the return to normal operation. As soon as the disk is spinning at normal operating speed, power to the wire may be withdrawn, and the slider flies over the surface of the disk supported on the existing air bearing.

Because of their inherent characteristics, shape memory alloys remain relatively stiff until they are heated the first time. Therefore, when initially installed, the wire lifts the flexures somewhat which is helpful during the initial assembly of the drive.

It will be appreciated that the lifting wire in both embodiments is disposed outside the periphery of the disk, so that no change of design of the flexure arm and slider is required.

Although only two embodiments of the present invention have been described herein, it should be understood that the present invention may be embodied in many other specific forms without departing from the scope of the invention as claimed. Particularly, it should be appreciated that the actual materials used for the various components, including the shape memory lifting wire may be widely varied. The positioning and arrangement of the various components including the support arms may also be widely varied. Indeed, the support arms may be carried by the E-block of the head positioning assembly as opposed to being formed as a part of the flexure assembly. The flexure assembly may be stamped as an integral piece as seen in Figure 3, or may include a flexure arm 35 attached to a flexure support 33 as seen in Figure 7.

It should also be appreciated that the simplified slider lifter structure set forth herein can be used regardless of the number of information storage disks and flexure assemblies that are used within a disk drive. That is each flexure can be provided with its own lifting arrangement. Therefore, the present examples and embodiments are to be considered as illustrative and not restrictive, and the invention is not to be limited to the details given herein, but may be modified within the scope of the appended claims.

## Claims

1. A slider lifter assembly for a disk drive assembly comprising a flexure arm (35) being arranged to carry a slider (27) and a transducer for transferring information to and from an information storage disk (20) and a lifting wire (40; 50), said lifting wire being formed from a shape memory alloy having martensitic and austenitic phase conditions, wherein the lifting wire cooperates with the flexure arm so that, when the lifting wire is in a first phase condition, the lifting wire lifts the flexure arm to lift the slider from the disk surface, and when the wire is in a second phase condition, the flexure arm deforms the lifting wire so that the slider is allowed to rest on or adjacent to the disk surface, or to fly over the disk surface free of positioning influence by the lifting wire,
said slider lifter assembly for a disk drive being characterised by
a pair of support arms (38) being arranged on opposite sides adjacent to said flexure arm (35) and extending in a direction towards said slider (27), said flexure arm (35) extending beyond the ends of said support arms (38)
and said lifting wire (40,50) being strung between said opposing support arms (38) adjacent the flexure arm(35).

2. An assembly according to claim 1 characterised in that the lifting wire (40; 50) is disposed outside the periphery of the disk (20).

3. An assembly according to claim 1 or 2 characterised in that the wire support arms (38) are carried by a flexure support (33) for coupling the flexure arm (35) to a head positioner (22).

4. An assembly according to claim 3 wherein the flexure support (35) is formed integrally with the flexure arm (33).

5. An assembly according to any preceding claim wherein the lifting wire (40) is substantially U-shaped in the first phase condition.

6. An assembly according to claim 1, 2, 3 or 4 wherein the lifting wire (50) is substantially straight in the first phase condition.

7. An assembly according to any preceding claim wherein the first phase condition is the austenitic phase.

8. An assembly according to claim 7 wherein the lifting wire (40; 50) is formed from a Ti-Ni alloy.

9. An assembly according to any preceding claim wherein the lifting wire (40; 50) is coated with an insulating material.

10. An assembly according to any preceding claim including transform means for heating the lifting wire (40; 50) to change the state of the wire from one of the phase conditions to the other phase condition.

## Patentansprüche

1. Abhebeeinrichtungs-Baugruppe für den Gleiter einer Plattenlaufwerk-Baugruppe, mit einem Biegearm (35), der zur Halterung eines Gleiters (27) und eines Wandlers zur Überführung von Informationen zu und von einer Informationsspeicherplatte (20) ausgebildet ist, und mit einem Abhebedraht (40; 50), wobei der Abhebedraht aus einer Legierung mit Formgedächtnis hergestellt ist, die martensitische und austenitische Phasenzustände aufweist, wobei der Abhebedraht mit dem Biegearm derart zusammenwirkt, daß, wenn sich der Biegedraht in einem ersten Phasenzustand befindet, der Abhebedraht den Biegearm anhebt, um den Gleiter von der Plattenoberfläche abzuheben, während, wenn sich der Draht in einem zweiten Phasenzustand befindet, der Biegearm den Abhebedraht verformt, so daß der Gleiter auf der Plattenoberfläche oder benachbart hierzu ruhen kann oder über der Plattenoberfläche frei von einem Positioniereinfluß durch den Abhebedraht fliegen kann, wobei die Abhebeeinrichtungs-Baugruppe für den Gleiter für ein Plattenlaufwerk dadurch gekennzeichnet ist, daß zwei Haltearme (38) auf gegenüberliegenden Seiten benachbart zu dem Biegearm (35) angeordnet sind und sich in Richtung auf den Gleiter (27) erstrecken, daß sich der Biegearm (35) über die Enden der Haltearme (38) hinaus erstreckt, und daß der Abhebedraht (40; 50) zwischen den gegenüberliegenden Haltearmen (38) benachbart zum Biegearm (35) ausgespannt ist.

2. Baugruppe nach Anspruch 1,
dadurch gekennzeichnet, daß der Abhebedraht (40; 50) außerhalb des Umfanges der Platte (20) angeordnet ist.

3. Baugruppe nach Anspruch 1 oder 2,
dadurch gekennzeichnet, daß die Draht-Haltearme (38) von einer Biegearm-Halterung (33) zur Kopplung des Biegearms (35) mit einer Kopf-Positioniereinrichtung (22) gehaltert sind.

4. Baugruppe nach Anspruch 3,
dadurch gekennzeichnet, daß die Biegearm-Halterung (35) einstückig mit dem Biegearm (33) ausgebildet ist.

5. Baugruppe nach einem der vorhergehenden Ansprüche,
dadurch gekennzeichnet, daß der Abhebedraht (40) in dem ersten Phasenzustand im wesentlichen U-förmig ist.

6. Baugruppe nach Anspruch 1, 2, 3 oder 4,
bei der der Abhebedraht (50) in dem ersten Phasenzustand im wesentlichen gerade ist.

7. Baugruppe nach einem der vorhergehenden Ansprüche,
bei der der erste Phasenzustand die austenitische Phase ist.

8. Baugruppe nach Anspruch 7,
bei der der Abhebedraht (40; 50) aus einer Ti-Ni-Legierung gebildet ist.

9. Baugruppe nach einem der vorhergehenden Ansprüche,
bei der der Abhebedraht (40; 50) mit einem Isoliermaterial beschichtet ist.

10. Baugruppe nach einem der vorhergehenden Ansprüche,
die Transformationseinrichtungen zur Erhitzung des Abhebedrahtes (40; 50) zur Änderung des Zustandes des Drahtes von dem einen Phasenzustand zum anderen Phasenzustand einschließt.

## Revendications

1. Dispositif de levage d'une tête magnétique pour disque dur comprenant un bras (35) flexible agencé pour supporter une tête magnétique (27) et un transducteur pour transférer des informations vers et depuis un disque (20) de stockage d'informations et un fil (40 ; 50) de levage, ledit fil de levage étant formé à partir d'un alliage à mémoire présentant des états de phase martensitique et austénitique, dans lequel le fil de levage coopère avec le bras flexible afin que, quand le fil de levage est dans le premier état de phase, le fil de levage soulève le bras flexible pour soulever la tête magnétique de la surface du disque et que, quand le fil est dans un second état de phase, le bras flexible déforme le fil de levage afin que la tête magnétique puisse reposer sur la surface du disque ou de manière adjacente à celle-ci, ou à survoler la surface du disque dépourvue de toute influence de positionnement par le fil de levage,
ledit dispositif de levage d'une tête magnétique pour disque dur étant caractérisé par
deux bras (38) de support agencés sur des côtés opposés contigus audit bras (35) flexible et s'étendant dans une direction vers ladite tête magnétique (27), ledit bras (35) flexible s'étendant au-delà des extrémités desdits bras (38) de support
et ledit fil (40, 50) de levage étant tendu entre lesdits bras (38) de support opposés contigus au bras (35) flexible.

2. Ensemble selon la revendication 1, caractérisé en ce que le fil (40 ; 50) de levage est placé à l'extérieur de la périphérie du disque (20).

3. Ensemble selon la revendication 1 ou 2, caractérisé en ce que les bras (38) de support de fil sont supportés par un support (33) flexible pour coupler le bras (35) flexible à un dispositif de positionnement (22) de tête.

4. Ensemble selon la revendication 3, dans lequel le support (33) flexible est formé d'un seul tenant avec le bras (35) flexible.

5. Ensemble selon l'une quelconque des revendications précédentes, dans lequel le fil (40) de levage est sensiblement en forme de U dans le premier état de phase.

6. Ensemble selon l'une quelconque des revendications 1, 2, 3 ou 4, dans lequel le fil (50) de levage est sensiblement droit dans le premier état de phase.

7. Ensemble selon l'une quelconque des revendications précédentes, dans lequel le premier état de phase est la phase austénitique.

8. Ensemble selon la revendication 7, dans lequel le fil (40 ; 50) de levage est formé à partir d'un alliage Ti-Ni.

9. Ensemble selon l'une quelconque des revendications précédentes, dans lequel le fil (40 ; 50) de levage est revêtu d'un matériau isolant.

10. Ensemble selon l'une quelconque des revendications précédentes, comprenant des moyens de transformation destinés à chauffer le fil (40 ; 50) de levage pour faire passer l'état du fil d'un des états de phase à l'autre état de phase.
